# EUROPEAN PATENT APPLICATION

(11) **EP 4 442 776 A1**
(43) Date of publication of application: **09.10.2024**
(21) Application number: 24161778.6
(22) Date of filing: 06.03.2024
(51) Int. Cl.: C09D 11/40, C09D 11/322

(54) **A SET OF INK FOR INKJET PRINTING A PAPER SHEET FOR BEING USED IN THE MANUFACTURING OF DECORATIVE PANELS, A METHOD FOR PRINTING ON A PAPER SHEET, A PRINTED PAPER SHEET AND A DECORATIVE PANEL**

(30) Priority: 13.03.2023 US 202363489819 P
(71) Applicant: Unilin, BV, 8710 Wielsbeke (BE)
(72) Inventor: CLEMENT, Benjamin, 8710 Wielsbeke (BE)
(74) Representative: Unilin Technologies

(57) **Abstract**

A set of inks for inkjet printing on a paper substrate, for example a paper sheet for being used in laminated panel, preferably floor, wall or furniture panels, said inks being pigmented inks, wherein said set of inks comprises: a cyan ink, a yellow ink, at least a red ink and at least a black ink.

## Description

The present invention relates to a set of ink for inkjet printing a paper sheet for being used in the manufacturing of decorative panels, for example floor, wall or furniture panels. The invention may further relate to a method for printing on a paper sheet, a printed paper sheet and/or to a decorative panel.

Paper sheets for decorative panels are usually printed using analogue gravure printing. In analog gravure printing multiple inks are printed using multiple engraved rollers, each roller being dedicated do a specific ink and to a specific design. Therefore, for each design to be printed it is possible to select the specific composition of each ink that best suit that specific design. A known drawback of analog printing is that shifting from one design to another is expensive and time consuming since it is necessary to engrave new cylinders and formulate the respective inks.

Decorative panels are mainly used for floor or furniture decoration and usually have a décor imitating a wood, stone, ceramic and/or cement. During private research the inventors have found that in analogue rotogravure printing of wood design, it is preferable to use red and yellow pigments with warm tonality, for example of red and orange; whereas for printing of stone imitating design it is preferable to use red and yellow color with a colder tonality, for example a blueish tonality.

Digital inkjet printing normally provides for a higher flexibility of the printing process and simplifies the operation of shifting from a décor to another one since makes use of a set of inks comprising the primary colors cyan, yellow and magenta with the addition of black (CMYK).

Thereto, in order to easily and quickly shift from one décor to another, the set of inks used in inkjet printing of paper sheets for decorative panel comprises inks of the primary colors, cyan, magenta and yellow, and black. This set of colors in fact provides for a broad color gamut that makes possible to print almost any desired design. Examples of magenta and yellow pigments are CI magenta pigment 122, CI yellow pigment 74, yellow pigment 155, yellow pigment 151.

Since the color build up is different in analog printing and inkjet printing, the switching from analog to digital printing can lead to metamerism issues. Moreover, the inventors, during private research have found that in order to correct said metamerism effect, it may be necessary to increase the ink load in order to correct the shades of the starting pigments. The inventors have also found that when said printed paper substrate has to be impregnated with a thermosetting resin and laminated to a wear layer, for example in a short cycle press, as in the manufacturing of floor panels, an excess of ink load and in particular of pigment load on the printed substrate may lead to adhesion issues between the printed substrate and the wear layer.

The present invention aims in the first place to provide an alternative ink set for inkjet printing onto plastic substrate for decorative panels, which, in accordance with several of its preferred embodiments, is directed to solve one or more of the problems arising in the state of the art.

Thereto, the present invention, according to its first independent aspect, a set of inks for inkjet printing on paper sheets for being used in laminated panel, preferably floor, wall or furniture panels.

Said inks are pigmented inks. Some or all of said pigments may comprise an average particle size measured in a dynamic light scattering device below 300nm. In some embodiments, said inks may comprise a pigment load between 2 and 7% weight on the total weight of the ink.

Preferably said set of inks comprises: a cyan ink, a yellow ink, at least a red ink and at least a black ink. Said set of ink may be free of magenta ink.

In some embodiments said red ink can comprise pigment selected from the group consisting of: C.I. pigment red 144, C.I. pigment red 254, C.I. pigment red 176, C.I. pigment red 122, C.I. pigment red 202, C.I. pigment violet 19, C.I. pigment red 32, C.I. pigment red 207, C.I. pigment red 242 or a mixed crystal thereof. Said pigments provides for a reduced color gamut, but the inventor has surprisingly found that their implementation into an inkjet printer can lead to a reduced metamerism in the shifting of a wood or stone design from an analog printing to digital printing. Moreover, they provide for a reduced ink consumption leading to cost saving and improved adhesion after lamination with a wear layer.

In some embodiment said red ink can show a warm tonality, for example with orange and/or yellow shades. In some embodiment said red ink may comprise at least one pigment selected in the group consisting of: C.I. pigment red 144, C.I. pigment red 254, C.I. pigment red 176, C.I. pigment red 207, C.I. pigment red 242 or mixed crystal thereof. In some embodiment the red ink may comprise at least one red pigment having a HUE angle between 350° and 42°, for example said red ink may comprise a mixture of red pigments and wherein the ink has a HUE angle between 350° and 42°. Said pigments have been found to be particularly adapted for limiting the color metamerism in the printing of wood decors.

In some embodiment said red ink can show a cold tonality, for example with violet and/or blue shades. For example, said red ink may comprise at least one pigment selected in the group consisting of: C.I. pigment red 122, C.I. pigment red 202, C.I. pigment violet 19, C.I. pigment red 32 or a mixed crystal thereof. In some embodiment, said red ink may comprise at least one red or violet pigment having a hue angle between 312° and 350°, said red ink may also comprise a mixture of pigments and wherein the ink has a HUE angle between 312° and 350°. Said pigments have been found to be particularly adapted for limiting the color metamerism in the printing of stone or cement decors.

Preferably said set of ink may comprise a first red ink and a second red ink wherein said first and second red ink are different each other, for example they comprise different pigments. For example, said first red ink can have a warmer tonality and the second red ink can have a colder tonality. The inventor has found that using a set of ink having two different set of red inks leads to an enlarged color gamut with respect to a set of ink using a unique red ink. Therefore, in this way it may be possible to print an enlarged selection of decors, in particular wood and stone décor, with the same set of inks but with an improved quality, reduced metamerism and reduced ink consumption compared to CMYK color system.

In some embodiment said first red ink can comprise at least one pigment selected in the group consisting of: C.I. pigment red 144, C.I. pigment red 254, C.I. pigment red 176, , C.I. pigment red 207, C.I. pigment red 242 or mixed crystal thereof; and/or said second red ink can comprise at least one pigment selected in the group consisting of: C.I. pigment red 122, C.I. pigment red 202, C.I. pigment violet 19, C.I. pigment red 32 or a mixed crystal thereof.

In some embodiment said first red ink may comprise at least one pigment having a hue angle between 350° and 42°, for example wherein said first red ink can comprise a mixture of pigments and wherein the ink has a HUE angle between 350° and 42°.

In some embodiments, said second red ink can comprise at least one pigment having a hue angle between 312° and 350°, for example wherein said second red ink can comprise a mixture of pigments and wherein the ink has a HUE angle between 312° and 350°.

In some embodiments, said yellow ink may comprise a pigment selected form selected in the group consisting of: C.I. pigment yellow 110, C.I. pigment yellow 150, C.I. pigment yellow 93, C.I. pigment yellow 139, C.I. pigment yellow 181 or a mixed crystal thereof. Inventors have found that this kind of yellow pigments has a reduced greenish shade compared to yellow pigment conventionally used in inkjet printing and may lead to a reduced metamerism, and reduced ink consumption, especially for printing wood and stone décor, and in particular if used in combination with the preferred red inks according to the invention and indicated above. In particular, inventors have surprisingly found that using a yellow pigment 150 may lead to a reduced metamerism and pigment load required for printing both wood and stone or cement décor, especially when it is used in combination with red inks instead of magenta inks.

In some embodiments, the cyan pigment can comprise a phtalocyanine pigment.

In some embodiments, said black pigment can comprise a carbon black pigment.

In some embodiments the set of inks may comprise a first and a second black ink, preferably said second black ink may have a lower color intensity than the first black ink. For example, said second black ink can comprise a pigment load lower than the first black ink, preferably said pigment load of the second black ink is at least 4, more preferably at least 5 times lower than the first black ink. In some embodiments, said first black ink may comprise a pigment load between 2 and 7% weight on the total weight of the ink. In some embodiments, said second black ink may comprise a pigment load comprised between 0.1 and 2% based on the total weight of the ink. The inventor has found that droplets of said second black ink can be print beside droplets of the first black ink to reduce unprinted white areas and reduce the grainy effect that is often obtained with a unique black ink. The color gamut may be further improved using the second black ink.

In some embodiments said inks of the set can be water-based, UV based or hydro-UV based. It is noted that water-based inks are preferred above other kind of inks because provide a reduced barrier effect on the surface of the paper substrate thereby improving the lamination strength with a wear layer.

In some embodiment the viscosity of the ink is below 15mPas at temperatures between 25 and 45°C.

In some embodiment the water-based ink may comprise wetting agent in a content of 0,1 - 3%, preferably surfynol 104E. In some embodiment the water-based ink may comprise coalescing agent in a content of 0-6%, preferably Dowanol DPnP. In some embodiment the water-based ink may comprise cosolvent and or humcetants in an amount of 2-50%, preferably propanediol or 1,2 hexanediol or mixtures with other glycols. In some embodiment the water-based ink may comprise dispersant in an amount of 1 - 10%. In some embodiment the water-based ink may comprise a pH adjuster in an amount of 0,1-1%. In some embodiment the water-based ink may comprise water in an amount of 25-80%. In some embodiment the water-based ink may comprise a binder in an amount of 2 - 20% by weight. In some embodiments, the such as a polyurethane or acrylate dispersion or mixtures thereof.

Another independent aspect of the invention provides for a method for manufacturing an inkjet printed paper sheet using the ink set of the first independent aspect.

Thereto a second independent aspect of the invention relates to a method for manufacturing a printed paper sheet, said sheet being of the type to be used in laminated panel, preferably floor, wall or furniture panels, comprising the step of providing said paper sheet and the step of inkjet printing a décor on said paper sheet, wherein said step of inkjet printing is performed using the set of inks according first independent aspect.

In some embodiments, especially when the inks are of the water-based type, an ink receiver layer may be provided on the surface of said substrate before printing the ink. said ink receiver layer can comprise a binder and a metal salt. In some embodiment said binder can preferably comprise mainly polyvinyl alcohol . The metal salt can comprise a cationic metal salt for example CaCl₂. The inkjet receiving layer can further comprise a cross linker and/or other additives like dispersant, coupling agent, wetting agent or PH modifiers. In some embodiments said inkjet receiver layer can comprise a pigment, preferably mineral particles, adapted to adsorb the vehicle of the ink. In some embodiments, the ink receiver layer can comprise a pigment, preferably a silica particles.

Said ink receiver layer can be or be provided in a predetermined amount between 0.5 g/sqm and 5 g/sqm dry weight.

Preferably, said paper sheet is provided with 0.2 to 7 g/m², and preferably between 0.5 and 5 g/m², dry coating weight of a binder in said ink receiver layer.

In some embodiments, especially when the inks are of the water-based type, a plasma or corona treatment may be performed on the surface to the paper sheet before printing the ink, especially in case the inks are of the UV-based types, or before providing said ink receiver layer.

In the preferred embodiment, the paper sheet can be of the type being suitable for being impregnated with a thermosetting resin. Preferably said paper substrate comprises a base paper weight, i.e. without ink receiving layer, higher than 20 grams per square meter, preferably between 50 to 100 grams per square meter, e.g. between 60 and 80 grams per square meter. Preferably, the paper substrate comprising the ink receiver layer shows a resin penetration time lower than 3 sec. Preferably, the paper substrate is opaque and/or contains titanium oxide as a whitening agent and/or other inorganic fillers. Alternatively, the paper substrate may be a colored, pigmented and/or dyed base paper. The paper sheet can show a mean air resistance as expressed in Gurley value below 40 sec, preferably below 25 sec. Paper showings said mean air resistance are more prone to impregnation with resins.

Preferably said décor can be a wood, stone, ceramic and/or cement imitating décor.

In some embodiments the method of the second aspect can comprise the step of drying and/or curing the printed inks, for example IR drying or UV curing.

A third aspect of the invention may relate to a printed paper sheet for being used in laminated panel, preferably floor, wall or furniture panels, wherein said printed paper sheet comprises an inkjet printed décor that is printed using the set of inks of the first independent aspect.

A fourth independent aspect of the invention may relate to a method for manufacturing a panel, preferably floor, wall or furniture panels, comprising a substrate, preferably made of paper, and a top layer, said top layer comprising a décor layer, wherein said décor layer is printed using the set of inks of the independent aspect. In some embodiments said décor layer can comprise a printed paper. Preferably, the paper sheet can be laminated onto the substrate, for example using heat and pressure. For example, the paper sheet can be attached on the substrate in a short cycle press. Preferably said top layer may comprise a wear layer, for example wherein said wear layer is in the form of an overlay paper sheet. Said wear layer can be a transparent layer. Said wear layer can be provided on top of the décor layer and preferably is attached to it by heat and pressure, for example in a short cycle press.

Preferably the substrate of the panel is made of a wood-based material, for example MDF or HDF. In some embodiments the substrate can be formed by a plurality if kraft paper sheets impregnated with phenol formaldehyde resin or melamine formaldehyde resin. In alternative embodiments, the substrate can be made of a thermoplastic material, for example PVC or PP. According to alternative embodiments of the invention the substrate can be a mineral based board such as MgO, or a cement based board, preferably fiber cement based boards.

With the intention of better showing the characteristics of the invention, in the following, as an example without any limitative character, several preferred forms of embodiments are described with reference to the accompanying drawings, wherein:
Fig. 1 shows in perspective a panel according to the invention;
Fig. 2 shows a view according to the line II-II indicated on figure 1;
Fig. 3 shows on a larger scale provide a view on the area F3 illustrated in figure 2;
Fig. 4 shows some steps in a method for forming the panel of figure 1.

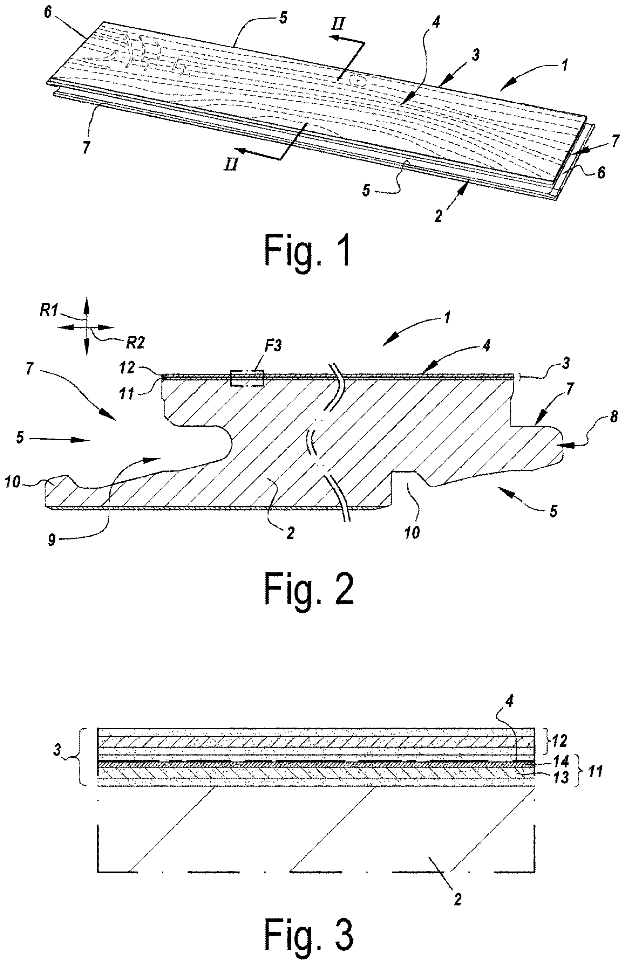

Figure 1 illustrates a decorative panel 1 comprising a substrate 2 made of a wood based material, preferably HDF and a top layer 3 provided with a printed motif 4, in this case imitating a wood décor. The panel 1 can have the shape of a rectangular and oblong floor panel, with a pair of long sides 5 and a pair of short sides 6. In this case the panel 1 is provided at least at the long sides 5 with coupling means 7 allowing to lock the respective sides 5 together with the sides of a similar panel both in a direction R1 perpendicular to the plane of the coupled panels, as in a direction R2 perpendicular to the coupled sides and in the plane of the coupled panels. As illustrated in figure 2 such coupling means or coupling parts can basically have the shape of a tongue 8 and a groove 9, provided with additional cooperating locking means 10 allowing for said locking in the direction R2.

Figure 2 and figure 3 show that the top layer 3 comprises a décor layer 11 and a wear layer 12 provided on top of the decor layer 11. The decor layer 11 comprises a paper sheet 13, and the digitally printed décor 4. The décor layer 11 further comprises an inkjet receiving layer 14 on the paper sheet 13. In the example the inkjet receiving layer comprises a binder and at least one cationic metal salt. The binder preferably comprises polyvinyl alcohol. The metal salt is CaCl₂. The inkjet receiving layer further comprise a cross linker, and other additives like dispersant, coupling agent, wetting agent or PH modifiers. The ink receiver layer is present on the paper sheet in an amount below 5 g/sqm (grams per square meter)

In the example, the wear layer 12 is a transparent overlay paper.

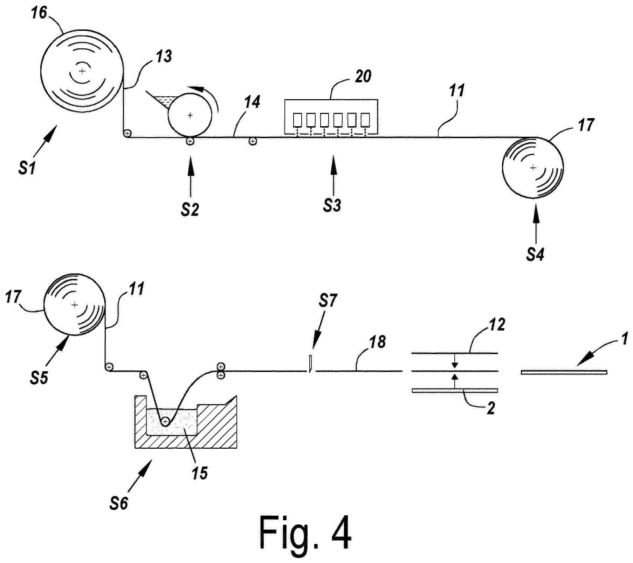

Figure 4 shows some step of a method for manufacturing the panel 1. In the method is illustrated a step S1 of providing the paper 13 by uncoiling it from a first roll 16. The paper 13 is then provided, on at least one surface, with the inkjet receiving layer 14, for example with a doctor blade, a roller coater or a sprayer, in a step S2.

The coated paper 13 is then printed (step S3) in a single pass printer 20 using pigment containing water-based inks.

After printing, the obtained decorative paper 11 is coiled again in a second roll 17 and then stocked, as indicated in step S4.

For the production of the panel 1, the decorative paper 11 can be uncoiled from second roll 17 in a step S5 and then impregnated with a thermosetting resin 15, preferably a melamine formaldehyde resin, in a step S6. The decorative sheet 11 can then be cut into sheets 18, in a step S7. The sheets 18 are then sandwiched between a support 2 and a wear layer 12 and then thermally laminated to form the panel 1.

In the examples the printed motif 4 is obtained by jetting a set of multiple inks. Said set of inks comprises six ink and comprises, preferably is constituted by: cyan, yellow, a first red ink, a second red ink, a first black ink and a second black ink.

Cyan inks comprises a phtalocyanine pigment.

Yellow ink comprises a C.I. pigment yellow 150.

First red ink comprises one warm red pigment having a hue angle between 350° and 42°, in particular C.I. pigment red 254.

Said second red ink comprises one warm red pigment having a hue angle between 312° and 350°, in particular C.I. pigment red 122.

Both the first and the second black ink comprise carbon black pigment C.I. 7. The first black ink comprises pigment load between 2 and 7% by weight and the second black ink comprises a pigment load between 0.1 and 2 % by weight.

Each ink of the set comprises a viscosity below 15 mPas at a temperature between 25 and 45°C.

Each ink of the set comprises a water content between 25 to 80% by weight; 0,1 to 3% weight of surfynol 104E as wetting agent; a humectant in an amount of 2 to 45%, preferably 1,2 hexanediol; 0-6% by weight of Dowanol DPnP; 1-10% by weight of dispersant,1-1 % by weight of pH adjuster.

It is generally noted that the dimensions of the represented top layer 3 and its components is, in the figures, drawn out of scale in order to better illustrate the invention.

The invention is further disclosed by the following item list as defined by the below numbered items.
1.- A set of inks for inkjet printing on paper sheet for being used in laminated panel, preferably floor, wall or furniture panels, said inks being pigmented inks, wherein said set of inks comprises: a cyan ink, a yellow ink, at least a red ink and at least a black ink.
2.- The set of inks of item 1, wherein said set of inks comprises a first red ink and a second red ink wherein said first and second red ink are different each other, for example they comprise different pigments.
3.- The set of inks of item 1 or 2, wherein said first red ink comprises at least one pigment selected in the group consisting of: C.I. pigment red 144, C.I. pigment red 254, C.I. pigment red 176, C.I. pigment red 207, C.I. pigment red 242 or mixed crystal thereof; and/or wherein said second red ink comprises at least one pigment selected in the group consisting of: C.I. pigment red 122, C.I. pigment red 202, C.I. pigment violet 19, C.I. pigment red 32 or a mixed crystal thereof.
4.- The set of inks of item 2 or 3, wherein said first red ink comprises at least one pigment having a hue angle between 350° and 42°, for example wherein said first red ink comprises a mixture of pigments and wherein the ink has a hue angle between 350° and 42°.
5.- The set of inks any of items from 2 to 4, wherein said second red ink comprises at least one pigment having a hue angle between 312° and 350°, for example wherein said second red ink comprises a mixture of pigments and wherein the ink has a hue angle between 312° and 350°.
6.- The set of inks according to any preceding items, wherein said red ink comprises a pigment selected in the group consisting of: C.I. pigment red 144, C.I. pigment red 254, C.I. pigment red 176, C.I. pigment red 122, C.I. pigment red 202, , C.I. pigment red 207, C.I. pigment red 242 C.I. pigment violet 19, C.I. pigment red 32 or a mixed crystal thereof.
7.- The set of inks according to any preceding items, wherein said yellow ink comprises a pigment selected form selected in the group consisting of: C.I. pigment yellow 110, C.I. pigment yellow 150, C.I. pigment yellow 93, C.I. pigment yellow 139, C.I. pigment yellow 181 or a mixed crystal thereof.
8.- The set of inks according to any preceding items, wherein the cyan pigment comprises a phtalocyanine pigment.
9.- The set of inks according to any preceding items, wherein said black pigment comprises a carbon black pigment.
10.- The set of inks according to any preceding items, wherein it comprises a first and a second black ink, preferably said second black ink having a lower color intensity than the first black ink.
11.- The set of inks of item 10, wherein said second black ink comprises a pigment load lower than the first black ink, preferably said pigment load of the second black ink is at least 4, more preferably at least 5 times lower than the first black ink.
12.- The set of inks of item 10 or 11, wherein said second black ink comprises a pigment load comprised between 0.1 and 2% based on the total weight of the ink.
13.- The set of inks to any preceding items, wherein said inks are water-based, UV based or hydro-UV based.
14.- A method for manufacturing a decor paper sheet, for being used in laminated panel, preferably floor, wall or furniture panels, comprising the step of providing a base paper sheet and the step of inkjet printing a décor on said paper sheet, wherein said step of inkjet printing is performed using the set of inks according to any preceding items.
15.- The method of item 14, wherein the paper sheet shows:
   - a base paper weight higher than 20 grams per square meter, preferably between 50 to 100 grams per square meter, e.g. between 60 and 80 grams per square meter; and/or
   - a mean air resistance as expressed in Gurley value below 40 sec, preferably below 25 sec.
16.- The method of item 14 or 15, wherein said décor is a wood, stone, ceramic and/or cement imitating décor.
17.- The method according to any of items from 14 to 16, wherein said method comprises the step of applying an ink receiver layer on the surface to be printed of paper sheet before performing said inkjet printing.
18.- The method according to item 17, wherein the paper sheet comprising the ink receiver layer shows a resin penetration time lower than 3 sec.
19.- The method according to item 17 or 18, wherein the ink receiver layer comprises at least a binder, preferably polyvinyl alcohol, and a metal salt, preferably a cationic metal salt.
20.- A decorative paper sheet for being used in laminated panel, preferably floor, wall or furniture panels, wherein said decorative paper sheet comprises an inkjet printed décor that is manufactured in a method according to any of items from 14 to 19.
21.- A method for manufacturing a decorative panel, preferably floor, wall or furniture panels, comprising a substrate, and a top layer, said top layer comprising a décor layer, wherein said décor layer is printed using the set of inks according to any of the times from 1 to 13, preferably said top layer further comprises a wear layer.

## Claims

1. A set of inks for inkjet printing on paper sheet for being used in laminated panel, preferably floor, wall or furniture panels, said inks being pigmented inks, wherein said set of inks comprises: a cyan ink, a yellow ink, at least a red ink and at least a black ink.

2. The set of inks of claim 1, wherein said set of inks comprises a first red ink and a second red ink wherein said first and second red ink are different each other, for example they comprise different pigments.

3. The set of inks of claim 1 or 2, wherein said first red ink comprises at least one pigment selected in the group consisting of: C.I. pigment red 144, C.I. pigment red 254, C.I. pigment red 176, C.I. pigment red 207, C.I. pigment red 242 or mixed crystal thereof; and/or wherein said second red ink comprises at least one pigment selected in the group consisting of: C.I. pigment red 122, C.I. pigment red 202, C.I. pigment violet 19, C.I. pigment red 32 or a mixed crystal thereof.

4. The set of inks of claim 2 or 3, wherein said first red ink comprises at least one pigment having a hue angle between 350° and 42°, for example wherein said first red ink comprises a mixture of pigments and wherein the ink has a hue angle between 350° and 42°.

5. The set of inks any of claims from 2 to 4, wherein said second red ink comprises at least one pigment having a hue angle between 312° and 350°, for example wherein said second red ink comprises a mixture of pigments and wherein the ink has a hue angle between 312° and 350°.

6. The set of inks according to any preceding claims, wherein said red ink comprises a pigment selected in the group consisting of: C.I. pigment red 144, C.I. pigment red 254, C.I. pigment red 176, C.I. pigment red 122, C.I. pigment red 202, , C.I. pigment red 207, C.I. pigment red 242 C.I. pigment violet 19, C.I. pigment red 32 or a mixed crystal thereof.

7. The set of inks according to any preceding claims, wherein said yellow ink comprises a pigment selected form selected in the group consisting of: C.I. pigment yellow 110, C.I. pigment yellow 150, C.I. pigment yellow 93, C.I. pigment yellow 139, C.I. pigment yellow 181 or a mixed crystal thereof.

8. The set of inks according to any preceding claims, wherein the cyan pigment comprises a phtalocyanine pigment.

9. The set of inks according to any preceding claims, wherein said black pigment comprises a carbon black pigment.

10. The set of inks according to any preceding claims, wherein it comprises a first and a second black ink, preferably said second black ink having a lower color intensity than the first black ink.

11. The set of inks of claim 10, wherein said second black ink comprises a pigment load lower than the first black ink, preferably said pigment load of the second black ink is at least 4, more preferably at least 5 times lower than the first black ink.

12. The set of inks of claim 10 or 11, wherein said second black ink comprises a pigment load comprised between 0.1 and 2% based on the total weight of the ink.

13. The set of inks to any preceding claims, wherein said inks are water-based, UV based or hydro-UV based.

14. A method for manufacturing a decor paper sheet (11), for being used in laminated panel (1), preferably floor, wall or furniture panels, comprising the step of providing a base paper sheet (13) and the step of inkjet printing a décor on said paper sheet, wherein said step of inkjet printing is performed using the set of inks according to any preceding claims.

15. The method of claim 14, wherein the paper sheet shows:
- a base paper weight higher than 20 grams per square meter, preferably between 50 to 100 grams per square meter, e.g. between 60 and 80 grams per square meter; and/or
- a mean air resistance as expressed in Gurley value below 40 sec, preferably below 25 sec.
